# EUROPEAN PATENT APPLICATION

(11) **EP 4 664 227 A1**
(43) Date of publication of application: **17.12.2025**
(21) Application number: 24182301.2
(22) Date of filing: 14.06.2024
(51) Int. Cl.: G05D 1/60

(54) **A METHOD AND A CONTROL SYSTEM FOR CONTROLLING A CONVOY OF WATERBORNE VESSELS**

(71) Applicant: AWAKE.AI OY, 20520 Turku (FI)
(72) Inventor: Tenovuo, Karno, 20520 Turku (FI)
(74) Representative: Moosedog Oy

(57) **Abstract**

Disclosed is a method for generating control data for automated, computerized control of following vessel (204, 306) in convoy of waterborne vessels sailing in body of water using an artificial intelligence model, method comprising: providing first digital twin (DT) of lead vessel (202, 302) and second DT of following vessel, providing third DT of body of water, providing mission specific information for lead vessel, simulating mission using mission specific information, AI model, and one of following: first DT (304) of lead vessel, second DT of following vessel, third DT of body of water, executing first part of mission, generating control data based on simulation and execution of first part of mission, calculating correlation factor between simulation and execution of first part of mission, and when correlation factor is higher than predetermined value, then using generated control data and second DT of following vessel for controlling following vessel.

## Description

### TECHNICAL FIELD

The present disclosure relates to methods for generating control data for an automated, computerized control of a following vessel in a convoy of waterborne vessels sailing in a body of water using an artificial intelligence model. Moreover, the present disclosure also relates to control systems for a convoy of waterborne vessels.

### BACKGROUND

In recent times, waterborne transportation has become increasingly vital for facilitating and maintaining global trade. This is because waterborne transportation, when compared to other forms of transportation, allows transporting large volumes of items at a minimum cost. To ensure that waterborne transportation remains reliable, efficient convoy management systems are being employed. These convoy management systems ensure safe navigation of waterborne transportation means (such as ships which carry the items to be traded) through complex waterways, straits, and channels. Typically, the growing demand for the waterborne transportation is driven by increasing trade volumes, expanding global supply chains, and the pursuit of sustainable shipping solutions. However, as urbanization continues to reshape coastal landscapes and inland water systems, complexity of maritime environments continues to increase. The complexity presents unique challenges in ensuring that convoy management systems and associated operations remain efficient. For ensuring that the convoy management systems are effective and efficient, there is sustainable focus on research and development of technologies that enhance situational awareness, optimize navigation routes, and improve operational efficiency in waterborne transportation while overcoming said challenges.

The existing convoy management systems may be associated with several limitations. One of the limitations may be an excessive reliance on natural water sources to ensure adequate supply of water to ensure seamless and reliable operation of the convoy management systems. For example, operating a convoy management system in a place such as the Panama Canal, carries risks such as potential shortage of water. Eliminating such risks may be challenging due to reliance of the convoy management system on two lakes at higher elevations for its operations at the Panama Canal. The demand for water raises complex considerations such as ensuring sufficient water levels for safe navigation of vessels through the Panama Canal, meeting needs of local population at the Panama Canal for clean drinking water and maintaining an ecological balance at the Panama Canal. Hence, the reliance impacts an overall performance and efficiency of operation of the convoy management system at the Panama Canal.

Another limitation associated with existing convoy management systems is reliance on outdated technologies, which lack real-time data integration and predictive capabilities, for operating the convoy management systems. This limitation hinders the ability to efficiently coordinate vessel movements and respond dynamically to changing maritime conditions. The technologies may not effectively account for variations in water depth, tidal changes, or unexpected obstacles. Such lack of accounting may lead to increased risk of collisions, delays, and inefficient usage of resources. Moreover, the inability to dynamically adjust routes and create schedules, even with availability of real-time data, may result in suboptimal convoy operations, thereby exacerbating congestion in critical waterways and straining water resources. Hence, addressing these limitations is essential for improving safety, reliability, and the efficiency of waterborne transportation.

Therefore, in light of the foregoing discussion, there exists a need to overcome the aforementioned drawbacks.

### SUMMARY

The aim of the present disclosure is to provide a method for generating control data for an automated, computerized control of a following vessel in a convoy of waterborne vessels sailing in a body of water using an artificial intelligence model and a control system for a convoy of waterborne vessels to enhance navigation precision, operational effectiveness, and safety within the convoy of waterborne vessels. The aim of the present disclosure is achieved by a method for generating control data for an automated, computerized control of a following vessel in a convoy of waterborne vessels sailing in a body of water using an artificial intelligence model and a control system for a convoy of waterborne vessels as defined in the appended independent claims to which reference is made to. Advantageous features are set out in the appended dependent claims.

Throughout the description and claims of this specification, the words "*comprise*", "*include*", "*have*", and "*contain*" and variations of these words, for example "*comprising*" and "*comprises*", mean "*including but not limited to*", and do not exclude other components, items, integers, or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

### BRIEF DESCRIPTION OF THE DRAWINGS

FIG. 1 illustrates steps of a method for generating control data for an automated, computerized control of a following vessel in a convoy of waterborne vessels sailing in a body of water using an artificial intelligence model, in accordance with an embodiment of the present disclosure;
FIG. 2 illustrates is an environment in which a control system is implemented for a convoy of waterborne vessels sailing in a body of water, in accordance with an embodiment of the present disclosure; and
FIG. 3 illustrates a modular view of a control system for a convoy of waterborne vessels sailing in a body of water, in accordance with an embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, the present disclosure provides a method for generating control data for an automated, computerized control of a following vessel in a convoy of waterborne vessels sailing in a body of water using an artificial intelligence model, the method comprising:
- providing a first digital twin of a lead vessel and a second digital twin of the following vessel,
- providing a third digital twin of the body of water,
- providing mission specific information for the lead vessel,
- simulating a mission using mission specific information, the artificial intelligence model, and at least one of the following: the first digital twin of the lead vessel, the second digital twin of the following vessel, the third digital twin of the body of water,
- executing a first part of the mission,
- generating control data based on the simulation and the executed first part of the mission,
- calculating a correlation factor between the simulation and the execution of the first part of the mission, and
- when the correlation factor is higher than a predetermined value, then using the generated control data and the second digital twin of the following vessel for controlling the following vessel.

In a second aspect, the present disclosure provides a control system for a convoy of waterborne vessels comprising:
a lead vessel provided with a first digital twin;
a following vessel provided with a second digital twin;
a third digital twin of a body of water;
a server system to provide a mission specific information for the lead vessel;
a simulating unit to simulate the mission using the mission specific information, an artificial intelligence model, and at least one of the following: the first digital twin of the lead vessel, the second digital twin of the following vessel, first digital twin of the body of water;
a control data generator to generate control data based on a simulation data and a reference data related and collected during execution of the first part of the mission by the lead vessel;
a calculating unit to calculate a correlation factor between the simulation and the reference data;
a controller configured to use the control data and the second digital twin to control the following vessel, if the correlation factor is higher than a predetermined value.

The present disclosure provides an aforementioned first aspect and the aforementioned second aspect for automating control of one or more vessels, in a convoy of vessels, that follow the lead vessel in the convoy. Herein, incorporating the first digital twin for the lead vessel, the second digital twin for the following vessel, and the third digital twin for the body of water, enables performing highly accurate simulations of operations of each vessel in the convoy of vessels. The performance of accurate simulations ensures that each following vessel, which is behind the lead vessel, maintains a safe distance from the lead vessel. Maintaining the safe distance significantly reduces the risk of collisions and navigational errors. Moreover, real-time simulations and comparisons between simulated missions enables the convoy of vessels to dynamically adapt to changing conditions such as variations in water depth, tidal currents, and traffic. The dynamic adaptation ensures optimal route adjustments and operational efficiency of the convoy of vessels. Additionally, an automation and use of the artificial intelligence (AI) model reduces the need for manual interventions. The usage of the AI model allows lowering labor costs, minimizing/eliminating scope of human error, enables automated processing, facilitates rapid decision-making, and generation of adaptive responses to dynamic environmental conditions. Thus, the usage of the AI model enhances operational efficiency and safety of the convoy of waterborne vessels. Moreover, the generation of the control data based on the simulations and reference data, collected during the execution of the mission by the lead vessel, optimizes resource utilization. This includes efficient fuel consumption, reduced water wastage in critical waterways, and streamlined operational processes. Furthermore, calculating the correlation factor between predictions obtained during the simulation and results obtained based on execution of the first part of the mission ensures that accurate and reliable control data is obtained for navigating the following vessel. Furthermore, the control system is designed to be scalable and adaptable to various convoy sizes and waterway conditions. Whether managing a small convoy or a large convoy of the waterborne vessels, the control system can be adjusted to meet specific operational requirements. The flexibility of the control system enhances versatility and usability in diverse maritime environments.

Throughout the present disclosure, the term "*vessel*" refers to a watercraft that operates in maritime transportation. Examples of such vessels may include, but are not limited to, cargo ships, tankers, container ships, ferries, yachts, fishing boats, research vessels etc. Herein, the term "*convoy of waterborne vessels*" refers to a group of vessels navigating together in the body of water, typically for purposes of safety, efficiency, or coordination.

Herein, the term "*following vessel*" refers to any vessel in the convoy of waterborne vessels that follows a lead vessel (as described later). Notably, the following vessel, also referred to as a slave vessel, may be a vessel that follows the lead vessel. The following vessel maintains a specific distance and alignment with respect to the lead vessel based on guidance instructions received from the lead vessel. The guidance instructions include navigation cues, which may be used by the following vessel to navigate safely. Herein, the AI model allows automating the control of the following vessel. The AI processes various inputs, such as sensor data, the mission-specific information, and environmental factors, to make informed decisions and generate control commands for navigation and operation of the following vessel.

Throughout the present disclosure, the term "*lead vessel*" refers to a master vessel that leads other vessels in the convoy of waterborne vessels. The lead vessel is operable to setting course, direction, and speed of other vessels in the convoy. The lead vessel is further operable to guide other vessels that follow the lead vessel (i.e., following vessels). The term "*digital twin*" refers to a highly detailed and dynamic virtual model that accurately represents real-time state, an operational behavior, and performance of the convoy of waterborne vessels. In this regard, the lead vessel is provided with the first digital twin, the following vessel is provided with the second digital twin and the body of water is provided with the third digital twin. Specifically, the digital twin incorporates physical attributes, operational parameters, and environmental conditions. Thus, the digital twin provides a comprehensive and real-time virtual counterpart of the convoy of waterborne vessels for advanced monitoring, analysis, and control purposes. Herein, the first digital twin and the second digital twin facilitate generation of real-time feedback on the performance of the lead vessel and the following vessel, respectively. The real-time feedback is generated by at least one first sensor, at least one second sensor and is provided to the control system.

Based on the feedback, adjustments in parameters such as speed, direction, or operational parameters, and so on, may be initiated. Herein, the first digital twin facilitates generation of a precise virtual representation of the lead vessel which may be updated. The second digital twin facilitates generation of a precise virtual representation of the following vessel which may be updated. The generation of accurate virtual representations is essential for monitoring current states, operational behavior, and interactions of each of the lead vessel and the following vessel with the environment. The virtual representations can simulate and adapt to changing environmental conditions, such as tides, currents, and weather. This adaptability is essential for maintaining safe and efficient operations under varying conditions.

In an embodiment, it is ensured that the first digital twin accurately reflects real-world status and operations of the lead vessel. This involves checking whether data that is being collected from sensors of the lead vessel is correctly represented in the first digital twin. The checking constitutes running simulations, comparing predicted outcomes with actual measurements, and ensuring all parameters (such as the speed, fuel consumption, engine temperature, hull stress, and navigational data) are within expected ranges. If it is determined that the first digital twin of the lead vessel is functioning as configured, then it can be inferred that the second digital twin of the following vessel is also functioning as per its configuration. This inference is based on a data collection mechanism across all vessels in the convoy. However, detection of issues in the first digital twin of the lead vessel may be indicative of existence of issues that could affect the second digital twin of the following vessel. In such detection scenarios, the second digital twin is modified to ensure that the second digital twin accurately represents the following vessel. The modification may involve recalibrating sensors, updating algorithms, or correcting data inconsistencies. The modifications ensure that the virtual representation (i.e., the second digital twin) is accurate and reliable, and that it reflects the true state of the following vessel. The modification of the second digital twin is essential for maintaining synchronized operations and safe navigation of vessels the convoy. In this regard, the synchronized operations may include coordinated navigation, speed adjustments, and communication protocols among all vessels in the convoy. The crew members, the control system, and an automated coordination mechanisms across the convoy are involved in synchronizing these operations to ensure the convoy moves as a cohesive unit, maintaining safety and efficiency.

Throughout the present disclosure, the phrase "*third digital twin of the body of water*" refers to create a highly detailed and accurate virtual representation of a waterbody through which the convoy of waterborne vessels will navigate. The third digital twin includes real-time data and characteristics (for example, such as depth, currents, tides, flow of water) of the waterbody, and physical features (for example, such as locks, channels, obstacles) associated with the waterbody. Herein, having a precise third digital twin of the waterbody enhances efficiency and safety of the convoy of waterborne vessels while navigating through the waterbody. For example, a precise third digital twin allows the vessels to avoid obstacles and optimize routes during the navigation. The third digital twin of the waterbody facilitates predicting how changes in the waterway, i.e., the waterbody is likely to affect the convoy of waterborne vessels, thereby enabling proactive adjustments from the end of the vessels in the convoy of vessels. This comprehensive approach ensures that operations of all elements of the convoy of waterborne vessels are aligned and are functioning optimally. Herein, sensors and measurement tools may be deployed in the waterbody to collect real-time data on various parameters associated with the waterbody (such as depth, flow rates, temperature, salinity, physical obstacles, and so on). The collected data is continuously fed into the AI model that updates the third digital twin of the body of water. The update ensures that the third digital twin accurately reflects the current state of the waterway (i.e., the waterbody). The third digital twin allows simulating potential hazards and environmental changes, and identifying and mitigating risks before they impact the convoy of waterborne vessels. Hence, overall safety of the convoy of waterborne vessels convoy is ensured.

Throughout the present disclosure, the phrase "*mission specific information for the lead vessel*" refers to data and instructions that are specific for a particular journey that the lead vessel in the convoy is scheduled to undertake. The mission specific information is essential for ensuring that the mission is carried out efficiently and safely. In this regard, the mission refers to a planned journey that the convoy of waterborne vessels undertake from a starting point to a destination point, encompassing all activities, navigation routes, and logistical tasks required to complete the journey. Herein, the mission specific information may include, but may not be limited to, navigational routes and segments, stop points, dynamic route adjustments, environmental and safety data, effective coordination and communication, and resource management etc. In this regard, the mission specific information enables effective coordination by outlining roles and responsibilities, ensures efficient resource management by detailing fuel consumption rates and supply needs, and enhances overall mission safety by incorporating real-time environmental data and contingency plans. The mission specific information enhances planning, coordination, risk mitigation, and resource optimization, hence leading to safer and more efficient operations by the vessels in the convoy. Providing the mission specific information to the lead vessel may enable the lead vessel to navigate safely, which is essential for avoiding obstacles and ensuring safe passage though complex waterways. Following the navigational routes and segments as indicated in the mission specific information may enable the lead vessel to follow optimized paths and reduce the likelihood of occurrence of navigational errors. Beneficially, the mission specific information, including planned stops for loading, unloading, and mooring, ensures that the lead vessel operates efficiently. This planning minimizes downtime and ensures that resources such as fuel and cargo are managed effectively. Moreover, the mission specific information also enables efficient scheduling and coordination with ports and other logistical operations, which reduces overall transit time and operational costs. Additionally, providing the mission specific information to the lead vessel ensures that the lead vessel can communicate effectively with the following vessel and control centers. This coordination is essential for maintaining the integrity in the convoy of waterborne vessels, as it ensures that all following vessels are synchronized with the lead vessel and can follow instructions issued by the lead vessel precisely. The conformance of the following vessels to the instructions allows reducing the risk of miscommunication between the lead vessel and the following vessels.

Optionally, the mission specific information comprises at least one of the following: environment specific information, information associated with traffic during the mission, information associated with characteristics of the lead vessel or the following vessel, information associated with navigational data during the mission.

In this regard, the environment specific information may include environmental conditions associated with the route along the waterway through which the convoy of vessels is likely to traverse. The environmental conditions refer to weather conditions, water currents, and other potential hazards associated with the route. The data related to wind speed, wind direction, precipitation, temperature, visibility, and atmospheric pressure, allows determining an impact of weather phenomena such as storms, fog, or high winds on operations of the following vessel and the lead vessel. Availability of information related to the water conditions (for example, such as a sea state, a wave height, a swell direction, a tidal current, and a water depth) may be essential for determining safe navigation routes, especially in turbulent waters. Moreover, identifying the data related to navigational hazards (for example, such as submerged obstacles, sandbars, reefs, and icebergs) allows preventing collisions and ensures integrity of the route that is to be traversed by the convoy. Furthermore, the information associated with traffic during the mission may include information pertaining to maritime traffic in vicinity of the convoy, including their positions, speeds, and intended courses. In this regard, monitoring the position of the lead vessel or the following vessel in real-time enables comprehensive determination of conditions in which the waterborne vessels of the convoy are traversing. This allows ensuring safety of the convoy of waterborne vessels. Beneficially, analyzing the speeds and the intended courses of the lead vessel or the following vessel, the control system (as defined later) can predict potential collision points and generate suggestions indicative of evasive maneuvers. For example, if two vessels in the convoy of waterborne vessels are predicted to intersect at a certain point, suggestions, which indicate to the lead vessel and/or the following vessel to adjust their respective speeds for avoiding a potential collision, may be generated.

Furthermore, the information associated with characteristics of the lead vessel, or the following vessel, may include information associated with physical attributes, capabilities, and operational characteristics of the lead vessel or the following vessel. Based on the physical attributes and the capabilities of the lead vessel or the following vessel, the control system can adjust strategies to optimize performance of the convoy. For example, if the lead vessel has greater maneuverability, then the lead vessel can navigate through complex waterways, while the following vessel can maintain a steady course. Beneficially, monitoring the operational characteristics of the lead vessel or the following vessel enables predictive maintenance, reducing downtime, and extending the life of the lead vessel or the following vessel. For example, if an unusual vibration is detected in an engine of the lead vessel, the lead vessel can schedule a maintenance prior to an occurrence of a critical failure. This allows avoiding a potential downtime.

The information associated with navigational data may include planned routes, waypoints, depth soundings, navigational aids, or navigational restrictions along the route through which the convey of waterborne vessels may traverse, and so on. Availability of navigational data allows optimizing planned routes, which allows ensuring that the optimal path is selected. Beneficially, detailed waypoints and depth soundings ensure precise navigation, thereby allowing accurate positioning of the lead vessel or the following vessel in the convoy of waterborne vessels. For example, the lead vessel can guide the following vessel based on the waypoints, maintain integrity of the convoy, and minimize risk of deviation of the convey from a planned route. Availability of the navigational aids and restrictions facilitates predicting and managing travel time efficiently.

A technical effect of incorporating the mission specific information in the convoy of waterborne vessels enables the comprehensive assessment of current conditions and adapt to various environmental and operational factors during the mission.

Optionally, the predetermined value is a function of the environment specific information. In this regard, the purpose for making the predetermined value as the function of the environment specific information is to enhance adaptability and accuracy of the control system for the convoy of waterborne vessels. Environmental factors such as the weather conditions, sea state, and visibility can significantly impact navigation and create safety concerns for vessels in the convoy. By incorporating the environmental factors into the AI model, the control system may determine a correct course of action, improving operational safety, and efficiency. Moreover, incorporating real-time data from sensors into the AI model enables the control system to adapt to changing environmental conditions swiftly and accurately. Beneficially, leveraging machine learning and the AI model allows the control system to learn from past experiences, identify patterns, and optimize control strategies in real-time, thereby enhances both adaptability and accuracy for the convoy of waterborne vessels. For example, if the environment specific information indicates high wind speeds and rough seas, the predetermined value may be increased to ensure that the following vessel maintains a predetermined distance from the lead vessel and operates at a slower speed. Conversely, in calm weather conditions, the predetermined value may be decreased to allow the following vessel to travel at a higher speed.

A technical effect of adjusting the predetermined value according to environment specific information is enhancement of responsiveness and precision of the control system. This allows real-time adjustments of the operations of the lead vessel and the following vessel based on current environmental conditions, which leads to improved navigational safety, reduced fuel consumption, and optimized operational efficiency.

Optionally, the environment specific information is used as a reference data. The environment specific information can be any information related to the environment where the vessel is operating or going to operate. Such usage provides a basis for comparison or evaluation of environmental conditions, performance of the convoy of waterborne vessels, and objectives of the mission during the simulation and execution of the mission. The utilization of reference data helps in optimizing route planning and adjusting the speed of the lead vessel and/or the following vessel for adapting to changing environmental conditions such as the weather conditions, the water currents, and the potential hazards. Beneficially, the environment specific information as the reference data provides access to current or latest environmental information, which allows the control system to dynamically adjust operations of the lead vessel and/or the following vessel in response to the changing conditions. This adaptive decision-making capability ensures resilience and responsiveness in events of unpredictable environmental factors. In an example, if visibility decreases due to fog or heavy rain, the control system may recommend reducing the speed of the lead vessel and the following vessel and activating navigation lights to maintain situational awareness and avoid collisions.

Throughout the present disclosure, the mission uses the mission specific information (as described earlier) for optimizing navigation, ensuring safety, and efficiently managing resources. Notably, it is possible that route can change dynamically during the mission depending on many variables. The mission can include stops for loading/unloading cargo, mooring the lead vessel and/or the following vessel or other necessary actions. Herein, simulating the mission is essential as it allows predicting potential issues and outcomes before an actual mission is executed. This leads to more reliable mission execution. The simulation provides valuable data that may be used planning convoy routes, allocating resources, and managing risks. Furthermore, the simulation allows identifying potential issues and proactively addressing the issues, which allows reducing likelihood of unexpected disruptions during the actual mission. Beneficially, the optimization of routes and operations through simulation results in time and fuel savings, thereby reducing operational costs. The simulation ensures that all vessels in the convoy are synchronized and can react coherently based on commands issued by the lead vessel and adapt to environmental changes. Through data collection, integration, real-time updates, and AI simulations, the lead vessel can navigate effectively, adapt dynamically, and maintain convoy integrity.

In an embodiment, the mission specific information is initially collected, and thereafter provided to the AI model as input, the AI model may process the mission specific information along with the first digital twin of the lead vessel, the second digital twin of the following vessel, and/or the third digital twin of the waterbody. The AI model is trained to execute a machine learning task that corresponds to analysis of the mission specific information and simulation of various scenarios (such as predicting optimal routes based on the current and forecasted environmental conditions, assessing impact of different speed profiles on fuel consumption and emissions, analyzing resource allocation strategies for efficient use of onboard supplies and crew members, evaluating safety measures and contingency plans for potential hazards like adverse weather or navigational challenges, and so on). Thereafter, multiple simulations may be run using the mission specific information and one or more of the first digital twin, the second digital twin, and/or the third digital twin, to predict the operational behavior of the lead vessel and the following vessel, interaction of the lead vessel and/or the following vessel with the environment, and response of the lead vessel and/or the following vessel in different situations/circumstances.

Optionally, a simulation of a previous mission is used for the simulation. In this regard, the phrase "*simulation of a previous mission*" refers to a past operational simulation undertaken for another convoy of waterborne vessels, typically involving navigation through the waterbody. Herein, the simulation of the previous mission may have been run under conditions that are similar or comparable to current simulation and may serve as a reference for current simulation. Beneficially, analyzing data from the simulation of the previous mission, the AI model can predict potential challenges accurately and optimize route planning, resource allocation, and decision-making for simulation of a current mission. The data (such as the speed, the fuel consumption, maneuverability, and response to environmental variables like wind, currents, and waves) extracted from the simulation of the previous mission can be used to calibrate and refine parameters of performance models of the lead vessel, the following vessel, and environmental factors. This leads to accurate simulations and enables more informed decision-making during the current mission. Moreover, insights gained from the simulation of the previous mission enables efficient utilization of resources such as fuel, time, and manpower. For example, if the simulation of the previous mission revealed inefficient fuel consumption patterns during certain phases of the mission, the AI model can recommend strategies to optimize fuel usage for the current mission, thereby reducing costs and environmental impact. Furthermore, by simulating scenarios encountered in the previous mission, the AI model can identify potential risks and vulnerabilities, and allow adapting proactive risk mitigation strategies. For example, if the simulation of the previous mission may have experienced safety incidents in specific navigation areas, the AI model can recommend alternative routes or enhanced safety protocols to minimize such risks during the current mission. Overall, utilizing the simulation of the previous mission streamlines the simulation of the current mission, which reduces the time and resources required for development of optimized operational strategies. This approach promotes efficiency in mission planning and execution, allowing for timely decision-making and improved operational readiness. A technical effect of using the simulation of the previous mission is the retraining of the AI model such that accuracy of the simulation is improved, risk assessment is accurate, and resource allocation is efficient.

Throughout the present disclosure, the term "*first part of the mission*" refers to an initial phase of the planned journey undertaken by the lead vessel in the convoy of waterborne vessels. Herein, the mission can be segmented into multiple parts. For example, length of the first part of the mission can be 1/10^{th} of the length of the mission. This if the length of the mission (i.e., the planned journey) is 100 nautical miles, the length of the first part of the mission encompasses the initial 10 nautical miles. Similarly, if the mission duration is 10 hours, the first part of the mission may constitute the first hour of the planned journey. This segmentation allows structured analysis and control of each part of the mission and ensures that performance of the lead vessel and environmental conditions are closely monitored. The segmentation of the mission and sequential execution of each part, allows focus monitoring of the progress of the mission, tracking movement of waterborne vessels in the convoy, assessing adherence of each vessel to the planned journey, and verifying that each vessel is achieving key milestones as per a preset schedule. For example, in a long-distance voyage, completing the first part of the mission indicates that the convoy has successfully departed from the origin point and is progressing towards its destination point. Furthermore, execution of the first part of the mission enables the operators of the convoy to identify and mitigate potential risks and challenges early in the journey. For instance, if the lead vessel encounters navigational hazards or adverse weather conditions during the first part of the mission, then appropriate measures can be taken to reroute the convoy, adjust navigation strategies, or implement safety protocols to minimize the impact on subsequent parts. Hence, successfully completing the first part of the mission validates effectiveness of route planning and preparation processes. It confirms that the chosen route is navigable, the performance of the lead vessel and the following vessel meets expectations, and operational procedures are functioning as intended. For example, if the first part of the mission involves navigating through a narrow channel (such as in a Panama Canal, a Suez channel, and the like), successful execution demonstrates that ability of the convoy to navigate challenging environments. Furthermore, execution of the first part of the mission enables the operators of the convoy to adapt their strategies and plans based on real-time feedback and observations. However, if unexpected events or challenges arise during the first part of the mission, the mission objectives can be adjusted, route plans revised, or resources allocated differently for subsequent segments. For example, encountering heavy traffic or unexpected delays during the first part of the mission may prompt implementation of alternative routes or adjust arrival schedules of the convoy at the destination point.

Optionally, the AI model is re-trained based on information received from the execution of the first part of the mission. The AI model is re-trained to enhance its performance and ensure adaptability to the specific conditions and challenges encountered during the execution of the first part of the mission. This adaptability allows the AI model to generate optimal results as the mission progresses. Additionally, the re-training process allows updating the AI model based on its performance during the initial phase of the mission such that errors in predictions are reduced/minimized. The retraining allows the control system to provide accurate navigation instructions to the following vessel, thereby enhancing overall convoy safety and efficiency. Furthermore, with access to updated information from the execution of the first part of the mission, the AI model being re-trained can generate accurate results in real-time. The AI model can analyze patterns, identify trends, and adjust its control strategies to optimize movements, route planning, and collision avoidance. This allows smoother and efficient convoy operations. The re-training of the AI model involves analyzing data collected during the execution of the first part of the mission. The data includes sensor readings, environmental conditions, vessel dynamics, and operational outcomes. The data is used for refining the AI model, optimizing parameters of the AI model (such as weights and hyperparameters), or update training dataset (used for the retraining). A technical effect of re-training the AI model based on information obtained based on the execution of the first part of the mission enhances its adaptability, accuracy, decision-making capabilities, and potential for continuous improvement, thereby maximizing performance and effectiveness of the convoy of waterborne vessels.

Throughout the present disclosure, the generation of the control data involves generating actionable information that guides operational behavior and decision-making processes of the lead vessel and the following vessel during their mission. Herein, the control data provides valuable insights and recommendations to the operators in the convoy of waterborne vessels, to make informed decisions about navigation, route optimization, and operational adjustments. The control data enables the optimization of the convoy operations by identifying opportunities for efficiency improvements, resource allocation, and strategic planning. Moreover, by generating the control data based on both the simulation and the executed first part of the mission, the operators in the convoy of waterborne vessels can ensure that safety protocols and contingency plans are in place to mitigate risks and effective response is provided in events of emergency.

Herein, data from various simulated scenarios, which incorporate various environmental conditions and operational parameters, is analyzed to predict potential outcomes, and assess the effectiveness of proposed strategies. The performance of the lead vessel and the following vessel during the executed first part of the mission is evaluated based on actual observations, sensor data, and operational metrics collected in real-time. Thereafter, simulation data and real-world performance metrics are integrated and analyzed together to identify patterns, trends, and correlations for generation of the control data that aligns with objectives of the executed first part of the mission and the operational requirements.

Optionally, the control data comprises a plurality of modes which are used for controlling the following vessel during the mission. The plurality of modes represent distinct sets of instructions or parameters that dictate responses of the following vessel in various conditions and situations encountered throughout the mission. Each mode may be optimized to address specific aspects of operation of the following vessel (such as speed, maneuverability, fuel efficiency, and safety) and ensure optimal performance throughout the mission. The plurality of modes may be selected based on real-time data and evolving mission requirements. The selection is such that the following vessel is enabled to respond effectively to changing conditions and unforeseen events during the mission.

In an embodiment, the plurality of modes are integrated into the control data generated by the convoy to ensure that the following vessel has access to a comprehensive set of instructions and parameters for executing the mission. During the mission, an appropriate mode may be selected based on current operational conditions, navigational requirements, and safety considerations to adjust the operational behavior of the vessel such that objectives of the mission is achieved. A technical effect of incorporating the plurality of different modes into the control data is the enhanced adaptability of the following vessel to changing environmental and operational conditions. This adaptability leads to improved safety and efficiency during the mission, as the following vessel can seamlessly transition between modes such as speed of the following vessel is adjusted optimally, collision is avoided, and an optimal route is selected.

Optionally, the modes used for controlling the following vessel during the mission comprise at least one of:
- cruising mode,
- safe state mode,
- mooring mode,
- dynamic positioning mode,
- maneuvering mode,
- manual mode.

Herein, "*cruising mode*" refers to an operational state where the following vessel in the convoy of waterborne vessels maintains a steady speed and direction while following the lead vessel along the planned journey. The cruising mode is optimized for ensuring fuel efficiency and minimal manual intervention. Beneficially, maintaining the steady speed results in lower emission of gases compared to fluctuating speeds and helping the following vessel to meet stringent environmental regulations. In an example, a container ship operating in the cruising mode in emission control areas (ECAs) produces fewer sulfur oxides and nitrogen oxides compared to a container ship that frequently updates its speed. In another example, a convoy of waterborne vessels travelling at a constant speed of 15 nautical miles per hour (knots) consumes significantly lesser fuel compared to waterborne vessels that vary their speeds frequently. The maintenance of the speed reduces the need for frequent acceleration and deceleration, which are fuel-intensive operations. It will be appreciated that the cruising mode not only optimizes fuel efficiency, but also integrates predictive analytics to anticipate changes in environmental conditions. This allows pre-emptive adjustment of the speed of the following vessel and direction. The pre-emptive adjustment of the speed allows greater savings in terms of reduction in fuel consumption by the following vessel.

Herein, "*safe state mode*" refers to the operational state that is activated in response to detection of hazards or emergencies during the mission. The safe state mode adjusts the operation of the following vessel to prioritize safety whereby the following vessel is potentially slowed down or stopped. The safe state mode provides a robust response to control system failures or external threats. Moreover, the safe state mode reduces the likelihood of damage to the following vessel and ensures the safety of passengers in the following vessel by minimizing abrupt or hazardous movements. In an example, during a sudden mechanical failure such as engine/steering failure or communication failure, the safe state mode can automatically reduce speed and bring the following vessel to a controlled halt. This may prevent potential collisions. Additionally, if there is an equipment breakdown, another following vessel in the convoy of waterborne vessels may perform maneuvers that ensure continuity of operations and maintaining safety. It will be appreciated that the safe state mode may incorporate advanced sensors (for example, such as radar sensor, sonar sensor, GPS sensors, and so on) that allow the following vessel to autonomously assess potential threats with heightened accuracy and respond swiftly with pre-emptive safety measures. This ensures unparalleled protection of passengers and cargo.

Herein, "*mooring mode*" refers to the operational state of the following vessel during docking or undocking procedures. In the mooring mode movements of the following vessel are precisely controlled to ensure safe and accurate mooring operations such as stable and secure docking at ports, piers, or buoys. This minimizes risk of collisions and damage to both the following vessel and the docking infrastructure. Beneficially, the mooring mode often integrates with communication systems to provide real-time updates to port authorities and dockworkers hence ensuring coordinated efforts during mooring process. The mooring mode also enhances safety by maintaining the following vessel in a secure position during loading and unloading operations. It prevents unintended movements that could lead to accidents. In an example, in the convoy of waterborne vessels, as the lead vessel approaches the designated mooring area, it switches to the mooring mode to initiate berthing process. Thereafter, the following vessel adjusts its approach to maintain alignment and a predetermined distance from the lead vessel. Once the lead vessel is securely moored, the following vessel switches to the mooring mode, deploying lines and securing them to shore-based points with precision, ensuring stable and safe docking. Based on a coordinated mooring mode control amongst the vessels of the convoy, efficiency of berthing operations of the vessels is ensured while mitigating potential risks in congested harbor environments. It will be appreciated that the mooring mode may utilize AI to dynamically adapt to changing tidal patterns and wind conditions, ensure precise positioning during docking procedures, and minimize reliance on human input for error-free berthing operations.

Herein, "*dynamic positioning mode*" refers to the operational state where the following vessel uses real-time data and algorithms to maintain its position accurately without anchoring. The position may be maintained even in challenging conditions (such as string currents, high winds, and rough seas). Beneficially, dynamic positioning mode provides flexibility in operating the following vessel. The flexibility facilitates rapid changes in position of the following vessel. In an example, a supply vessel servicing offshore platforms can quickly adjust its position and heading direction using dynamic positioning mode to accommodate for changing sea conditions or unexpected changes in docking requirements. Thus, the dynamic positioning mode allows optimizing logistics and minimizing downtime. It will be appreciated that the dynamic positioning mode employs machine learning algorithms that continuously analyze environmental data to optimize positioning of the following vessel, thereby ensuring stability even in extreme weather conditions or in events of unexpected disturbances.

Herein, "*maneuvering mode*" refers to the operational state used for navigating the following vessel through complex environments that require precise and controlled movements during the mission. The maneuvering mode enables the following vessel to navigate through narrow channels, berthing areas, and crowded ports with precision such that risks of collisions and damages to the following vessel are avoided. Moreover, the maneuvering mode facilitates the following vessel to adjust its movements rapidly in response to changing environmental conditions such as wind, currents, and waves, which enhances safety and stability during navigation. In an example, the following vessel maneuvering through a harbor with strong crosscurrents can use the maneuvering mode to maintain control and compensate for external forces. It will be appreciated that the maneuvering mode leverages real-time simulation models to predict response of the following vessel to various navigation inputs, thereby enabling proactive adjustments to maintain optimal maneuverability and safety in congested waterways or high-traffic areas.

Herein, "*manual mode*" refers to the operational state where human operators take direct control of the following vessel during the mission. The manual mode is used in situations that require human judgment and intervention. Herein, the operators adjust engine speed and thrust to control forward or reverse movement of the following vessel. This control enables precise maneuvering, acceleration, and deceleration as required for safe navigation. In an example, the following vessel may encounter an unexpected congestion in the narrow channel due to sudden arrival of multiple incoming vessels. In this situation, the control system may struggle to adapt quickly enough to avoid potential collisions or delays. Thereby, switching to the manual mode, experienced operators onboard the following vessel can take immediate control of propulsion and steering, thereby allowing them to navigate the following vessel through congested area with precision. In this regard, the operators may reduce speed, alter course, and communicate with other vessels using maritime radio protocols to coordinate safe passage. It will be appreciated that the manual mode may integrate haptic feedback interfaces, providing operators with tactile cues that enhance situational awareness and responsiveness, thereby enabling precise control even in challenging maritime environments where visual cues may be limited.

A technical effect of utilizing the plurality of modes for controlling the following vessel during the mission is the flexibility in terms of managing the following vessel based on dynamic environmental conditions and operational requirements. This ensures optimal performance and safety across diverse navigational scenarios and enhances overall efficiency and reliability of operations in the convoy of waterborne vessels.

Throughout the present disclosure, "*correlation factor*" refers to a quantifiable parameter that is utilized to assess the degree of similarity between predicted outcomes generated by the simulation and actual outcomes observed during the execution of the first part of the mission. This factor serves as a statistical metric to evaluate the accuracy and reliability of the simulation in replicating real-world scenarios. The correlation factor serves as a quality assurance tool for ensuring that simulated scenarios align closely with real-world conditions and events. Notably, a high correlation factor indicates similarity between the simulated and observed outcomes, thereby signifying the effectiveness of the simulation in predicting behavior and performance of the following vessel during the mission. Conversely, a low correlation factor is indicative of dissimilarities between the simulated and observed outcomes, thereby highlighting potential areas for improvement in predictive capabilities of the simulation. It will be appreciated that calculating the correlation factor enables data-driven optimization of convoy management strategies, thereby fostering enhanced safety, efficiency, and adaptability in operations of the convoy of waterborne vessels. In an embodiment, the correlation factor is computed by comparing key performance metrics (such as an accuracy, a precision, a correlation coefficient, and a mean absolute error) derived from the simulation with corresponding data obtained during the execution of the first part of the mission. This comparison may involve statistical analyses or mathematical algorithms to determine the level of correlation between the simulated and the actual outcomes.

Optionally, the correlation factor is dependent on at least one of:
- wind speed,
- wind direction,
- water current,
- water level,
- rainfall level.

The dependency of the correlation factor on the wind speed is due to an impact of the wind speed on the movement of the convoy of waterborne vessels during the mission. Strong winds can alter trajectory and the speed of the lead vessel and the following vessel, thereby influencing their alignment with simulated paths. For example, higher wind speeds lead to greater deviations between the simulated and the actual behavior of the vessel. In an event of blowing of strong winds of high speed, calculation of the correlation factor is impacted. In order to ensure that the simulation accurately reflects the effects of the wind speed on navigation of the convoy of waterborne vessels in actual missions. Beneficially, the accurate assessment of the wind speed may reduce the risk of navigational errors or collisions, particularly in challenging conditions. For example, the waterborne vessels in the convoy which may be navigating in windy areas may experience difficulty in maintaining the right course, but with the wind speed factored into the correlation factor, the control system for the convoy of waterborne vessels can anticipate and mitigate these risks effectively.

Moreover, the wind direction significantly affects dynamics of the convoy of waterborne vessels, influencing heading angle, drift, and distribution of forces acting on each vessel. However, changes in the wind direction can alter trajectory, speed, and stability of each vessel, particularly in open water or when maneuvering in confined spaces. Thus, the wind direction is an essential parameter that impacts the calculation of the correlation factor. The incorporation impact of the wind direction in the calculation of the correlation factor enables better anticipation of vessel responses to changing environmental conditions. The control system can dynamically adjust navigation plans based on data indicative of wind direction, which ensures that the convoy of waterborne vessels remains on course and within safe operating limits. For example, if the wind direction shifts unexpectedly, causing the convoy of waterborne vessels to drift off track, then the calculation of correlation factor involves taking into account corrective actions that may be initiated to maintain an alignment with the intended route. Furthermore, the water current significantly affects the movement and stability of the convoy of waterborne vessels. The accurate modelling of the water current is essential for predicting the operational behavior of the lead vessel and the following vessel for ensuring safe navigation of the convoy of waterborne vessels. However, speed and direction of the water current can vary significantly, thereby impacting the course, the speed, and the fuel consumption of the convoy of waterborne vessels. Therefore, impact of the water current needs to be taken into account in the calculation of the correlation factor. Such accounting enhances the accuracy of the simulation data and the control data. Beneficially, accounting the water current in the calculation of the correlation enables optimizing the speed and engine power of the convoy of waterborne vessels. Such optimization leads to optimal fuel consumption. Additionally, determining and/or predicting the effects of the water current enhances the overall safety of the convoy of waterborne vessels since the determination/prediction facilitates timely adjustments to avoid hazardous situations. Furthermore, changes in the water level can affect draft, buoyancy, and the ability of the convoy of waterborne vessels to pass through certain areas without grounding. Therefore, accurately modelling and accounting for variations in the water level are essential for safe and efficient navigation. Beneficially, monitoring the water level contributes to predictive maintenance by identifying areas where fluctuating water levels could lead to increased wear and tear on hull and propulsion system of the waterborne vessels. For example, regularly navigating in low water levels might expose the hull to abrasive sediments, leading to requirement of having to perform frequent inspections and maintenance. Furthermore, the rainfall level can significantly affect the conditions in which the convoy of waterborne vessels operate. High rainfall can lead to changes in the water level, increase the water current, and reduce visibility, thereby impacting the operational behavior of the waterborne vessels in the convoy. Thus, accurately accounting for the rainfall level is essential for ensuring safe navigation and efficient route planning.

In an embodiment, during the mission, data related to the at least one of: the wind speed, the wind direction, the water current, the water level, and the rainfall level is collected and compared with the simulated data. Thereafter, correlation between the actual outcome and simulated conditions. The actual outcome, which includes the real-world data observed during the mission, is compared to the simulated conditions, which are the predicted scenarios generated by the AI model prior to the mission. If the data collected during the mission deviates significantly from the simulated data, the correlation factor will be lower, indicating that the simulation is not accurate and requires refinement. In such cases, the AI model is re-trained with the new actual outcome data to improve the accuracy of future simulations. The refined model enhances the precision of control commands, which are the instructions given to manage vessel operations, such as adjusting speed, changing course, or deploying mooring lines, ensuring better alignment with real-world conditions and optimal mission performance.

A technical effect of the correlation factor being dependent on the at least one of: the wind speed, the wind direction, the water current, the water level, and the rainfall level, is the enhanced accuracy and responsiveness of the control system. This allows the control data to adapt to real-time conditions, improving navigational safety, operational efficiency, and overall convoy reliability.

Optionally, at least one of the water level and the rainfall level is used for modelling the provided third digital twin of the body of water. In this regard, using the at least one of the water level and the rainfall level into the third digital twin is essential, as these factors significantly influence navigability, safety, and operational planning of the convoy. However, the water level can change due to tides, seasonal variations, and rainfall, which affect the depth and flow of the body of water. The rainfall level also impacts the water volume and can cause flooding or changes in directional flow of water (such as tidal currents, river currents, and ocean currents). For example, during the mission, the third digital twin of the body of water may predict an incoming storm with heavy rainfall that may affect the depth of water of a channel through which the convoy may traverse. In such scenarios, using the rainfall level (current/measured or forecasted) into the third digital twin enables proactive routing decisions for the convoy of waterborne vessels, such that traversing through areas prone to flooding are avoided. This proactive measure prevents potential hazards and ensures the safe passage of the convoy through the body of water. Optionally, at least one of: tidal information, characteristics of the body of water, a required draft of the convoy of waterborne vessels, an amount of drinking water required from the body of water, is also used for modelling the provided third digital twin of the body of water. In this regard, the tidal information provides data on tide levels affecting water depth and current flow. The tidal information helps in planning optimal routes and ensuring safe navigation. Additionally, the characteristics of the body of water include width, depth, and other physical attributes of the body of water. The characteristics of the body of water ensures the convoy of waterborne vessels are able to navigate through the body of water without running aground. Furthermore, a required draft of the convoy of waterborne vessels may indicate a depth of water that is required for the convoy to float. This ensures that the convoy can safely pass through shallow regions. Furthermore, the amount of drinking water required from the body of water ensures that sufficient resources are available throughout the mission. A technical effect of using at least the water level and the rainfall level for modelling the third digital twin of the body of water is the enhanced accuracy and reliability of the third digital twin. The incorporation these dynamic environmental factors (such as tidal changes, river inflows, precipitation patterns, and seasonal variations), the third digital twin can accurately simulate real-world conditions, which leads to better planning, safer navigation, and efficient operations.

Throughout the present disclosure, the term "*predetermined value*" refers to a pre-established threshold value that is set for assessing correlation between simulated mission data and the actual execution data obtained based on the execution of the first part of the mission. The predetermined value serves as a reference point against which the correlation factor is compared. Notably, if the correlation factor exceeds or is close to the predetermined value, it indicates a close match between the simulated and executed missions, thereby validating the accuracy and the reliability of the simulation model. In this scenario, the generated control data derived from the simulation can be confidently utilized to guide the following vessel. The control data includes instructions and parameters for controlling the movement, speed, and other relevant aspects of the following vessel. Additionally, the second digital twin of the following vessel, which mirrors its real-world counterpart, i.e., the following vessel, is employed to simulate, and validate the effectiveness of the control commands prior to their execution. Conversely, if the correlation factor is below the predetermined value, it indicates that adjustment of control parameters (such as the speed, propulsion power, and rudder angle) is required to ensure effective navigation of the following vessel. Beneficially, by employing the generated control data and the second digital twin, the control system enables precise and adaptive control of the following vessel in response to changing environmental conditions and mission requirements.

Optionally, the predetermined value is a function of a distance from the lead vessel to a shoreline of the waterbody. In this regard, "*shoreline of the waterbody*" refers to a boundary line where the land meets the water in a given body of water, such as an ocean, a sea, a lake, a river, or any other waterway. Typically, the shoreline of the waterbody is characterized by its fluctuating position due to tidal changes, wave actions, and other natural phenomena. Herein, the shoreline serves as an essential geographical reference point for determining distances, planning routes, and implementing safety measures. When the lead vessel is closer to the shoreline of the waterbody, the navigational environment becomes more complex due to various factors such as shallow waters, increased maritime traffic, and the presence of obstacles. The higher correlation factor in these areas ensures that the control data is highly accurate and reliable. For example, if the lead vessel is too close to the shoreline of the waterbody, the control system can instruct the following vessel to ensure that the distance between the lead vessel and the following vessel is sufficient to ensure safe navigation and maneuverability. Generation of precise and relevant control data results in a dependable execution of the plan of the mission, where the mission progresses smoothly and as expected without significant deviations or interruptions. The control system can proactively adjust the operational behavior of the lead vessel based on its proximity to land. Consequently, the predictive approach minimizes the likelihood of unexpected deviations and interruptions, thereby enhancing the overall safety and efficiency of the operations of the convoy of waterborne vessels. Thereby, ensures that the mission is executed in a manner that is both reliable and consistent with the predetermined value. A technical effect of making the predetermined value for the correlation factor as the function of the distance between the lead vessel and the shoreline is the enhanced safety and reliability in navigation. This approach ensures that the control data is more accurate and responsive to the complex and dynamic conditions near the shoreline of the waterbody.

Optionally, the artificial intelligence model is re-trained until the correlation factor is higher than the predetermined value. In this regard, the purpose of re-training the AI model is to continuously improve its accuracy and effectiveness in predicting and controlling the operational behavior of vessels within the convoy of waterborne vessels. By iteratively adjusting the AI model based on the correlation factor, the control system aims to refine its ability to simulate and respond to real-world conditions encountered during the mission. The process involves iteratively updating the AI model using feedback from the correlation factor calculations. Initially, the AI model is trained using available data and simulation techniques. In this regard, the available data may include historical mission data, environmental conditions (such as the wind speed, the wind direction, the water current, the water level, and the rainfall level), vessel performance metrics (such as the speed, the fuel consumption, and the maneuverability), and sensor data from the vessels. The simulation techniques may involve the use of digital twins to create virtual replicas of the lead vessel, the following vessel, and the body of water, enabling the AI model to simulate various scenarios and predict outcomes based on different variables and conditions. Additionally, machine learning algorithms and predictive analytics are utilized to process the data, identify patterns, and improve the model's predictive capabilities. Thereafter, the performance of the AI model is evaluated by comparing outcomes obtained after simulation with outcomes obtained after execution of the first part of the mission. In this regard, if the correlation factor falls below the predetermined threshold, then the AI model is re-trained using additional data and refined algorithms. The additional data may include, but may not be limited to, real-time mission data, anomalous event data, external data sources, and sensor calibration data. The refined algorithms may include, but may not be limited to, enhanced machine learning algorithms, adaptive algorithms, predictive analytics, and optimization algorithms. The AI model may be retrained until the correlation factor meets or exceeds the predetermined value. Such retraining facilitates performance of adaptive and optimized convoy operations in real-time, leveraging accurate simulation data and execution data for ensuring effective and safe navigation of the following vessel in dynamic maritime environments, enhancing operational efficiency, and reducing risk of potential incidents. A technical effect of re-training the AI model until the correlation factor is higher than the predetermined value is the optimization of predictive accuracy and performance of the AI model.

Optionally, the controlling comprises controlling a distance between the lead vessel and the following vessel, wherein the distance is a function of the correlation factor. In this regard, the distance is regulated based on the correlation factor. Maintaining an appropriate distance between the lead vessel and the following vessel is essential for safe and efficient convoy operations. Different vessels may have varying capabilities for acceleration and deceleration, which can impact timespan within which the lead vessel and the following vessel can respond to changes in the speed or halt. Thus, controlling the distance based on the correlation factor ensures that the following vessel can respond appropriately to the movement of the lead vessel and the environmental conditions, and enhances overall safety and performance of the convoy of waterborne vessels. Beneficially, maintaining a safe distance between the lead vessel and the following vessel based on real-time conditions can lead to efficient fuel usage (which is due to minimization of unnecessary accelerations and decelerations). In an embodiment, if the lead vessel and the following vessel are travelling at high-speeds and the correlation factor indicates high degree of accuracy between the simulation data and real-time data, then the distance between the lead vessel and the following vessel may be minimized (by instructing the following vessel to maintain a closer proximity). Conversely, if the correlation factor is low, then the distance between the lead vessel and the following vessel might be increased (by instructing the following vessel to reduce the speed) to ensure safety. A technical effect of controlling the distance between the lead vessel and the following vessel based on the correlation factor, is the enhanced safety and operational efficiency of the convoy. This adaptive control leads to reliable and effective convoy operations, especially in variable and challenging maritime environments.

Optionally, the controlling comprises controlling a speed of the following vessel for a second part of the mission, wherein the speed is a function of the correlation factor. Herein, "*second part of the mission*" refers to a distinct phase of the planned journey undertaken by the lead vessel in the convoy of waterborne vessels. The second part of the mission may involve specific tasks, objectives, and environmental conditions that may differ from that of the first part of the mission. Notably, the division of the mission into multiple parts allows focused planning, execution, and control of the operation of the convoy of waterborne vessels, with each part potentially requiring unique strategies or adjustments based on the real-time data, environmental conditions, and mission objectives. Herein, controlling the speed of the following vessel based on the correlation factor ensures that the operations of the following vessel are dynamically adjusted to real-time conditions. This approach enhances safety, efficiency, and reliability, by making the speed of the following vessel adaptive to changes in the environment and parameters of the mission.

During the second part of the mission the following vessel may traverse through a region where there are strong and unpredictable water currents. In such circumstances, the AI model may detect that the speed of actual water currents is higher than those predicted in the simulation.

This may result in obtainment of a lower correlation factor. Based on the correlation factor, the control system may instruct to decrease the speed of the following vessel. Reducing the speed provides a timespan within which the following vessel may adjust its course and safely navigate through the water currents. Furthermore, the reduction of the speed allows the following vessel to efficiently manage its propulsion and steering to counteract the strong water currents, thereby ensuring that it stays on an intended path without deviation in an event of encountering a hazard. A technical effect of controlling the speed of the following vessel for the second part of the mission based on the correlation factor allows the second vessel to adapt its responses to changing environmental conditions in real-time, thereby significantly enhancing the safety and efficiency of the operation of the following vessel.

Optionally, the lead vessel and/or the following vessel includes at least one sensor for measuring at least one of:
- wind speed,
- wind direction,
- water current,
- water level,
- rainfall level.

In an embodiment, the at least one sensor is operable to measure the environment specific information, which is essential for operation and control of the convoy of waterborne vessels. The at least one sensor may include, but is not limited to, an anemometer for measuring the wind speed, a wind vane for measuring the wind direction, an acoustic doppler current profiler (ADCP) for measuring the water current, a pressure transducer for measuring the water level, and a rain gauge for measuring the rainfall level. The at least one sensor may be installed on the lead vessel and/or the following vessel. The at least one sensor may continuously or periodically measure at least one of: the wind speed, the wind direction, the water current, the water level, and the rainfall level. The measurements may be fed into the first digital twin, the second digital twin, the third digital twin and the control algorithms, which are responsible for processing and analyzing the data to generate commands or recommendations for the operational parameters of the vessel (such as the speed, the heading, and propulsion settings). Based on the measurements obtained in real-time data, the AI model and the control system may modify navigational and operational parameters of the waterborne vessels in the convoy. Beneficially, the real-time measurements ensure that the first digital twin of the lead vessel, the second digital twin of the following vessel, and the third digital twin of the body of water are highly accurate and are reflective of current conditions. Moreover, the ability to dynamically adapt to environmental changes, such as changing water current or changing rainfall level, ensures that the convoy can maintain optimal performance throughout the mission. Furthermore, by utilizing the real-time environmental data, the control algorithms can provide more accurate guidance hence leading to improved navigational accuracy, increased safety, and optimized operational performance of the convoy. For example, if the at least one sensor on the lead vessel detects an increase in the rainfall level and a rising water level ahead, then, parameters measured by the at least one sensor is fed into the third digital twin of the body of water, which predicts potential flooding in certain areas. Thereafter, the control system adjusts the route of the convoy to avoid these areas, which ensures safe passage, and prevents delays and potential accidents. Specifically, measurements of the at least one sensor may be shared among all vessels in the convoy of waterborne vessels. Such data sharing ensures that all the vessels in the convoy have access to up-to-date information and can collectively benefit from the insights derived from the AI model. This enhances the overall efficiency, safety, and coordination of convoy operations. Typically, communication means are employed for transmitting the data, messages, or signals between the vessels within the convoy. In this regard, the communication means may include, but is not limited to, a wireless communication, a satellite communication, a mobile data networks, a wired communication and the like.

A technical effect of incorporating the at least one sensor for measuring at the least one of: the wind speed, the wind direction, the water current, the water level, and the rainfall level is the enhanced precision and adaptability of the lead vessel and/or the following vessel.

Optionally, the lead vessel has at least one first sensor and the following vessel has at least one second sensor, for measuring the environment specific information during the mission. When values measured by the at least one first sensor and the at least one second sensor deviate more than the predetermined value, the second digital twin of the following vessel is disabled.

The lead vessel and the following vessel are equipped with the at least one first sensor and the at least one second sensor respectively. The at least one first sensor and the at least one second sensor may measure the environment specific information (as described earlier) during the mission. The values measured by the at least one first sensor and the at least one second sensor may be compared. If it is determined that a deviation between measurements obtained from the at least one first sensor of the lead vessel and measurements obtained from the at least one second sensor of the following vessel exceeds the predetermined value, an inconsistency is detected. Based on the determination, the second digital twin of the following vessel is disabled to prevent the control system from using potentially inaccurate data.

Notably, the control system may require accurate data for generation of legitimate control instructions based on which navigation and operation of the following vessel may be controlled. Therefore, the detection of the inconsistencies between the measurements obtained from the at least one first sensor and the at least one second sensor may indicate that the measurements are inaccurate. A significant deviation between the measurements obtained from the at least one first sensor and the at least one second sensor may suggest that the environment specific information measured by the at least one first sensor of lead vessel and the at least one second sensor of the following vessel may not be in sync. The detected inconsistency or lack of synchronization may be required to be addressed for maintaining fidelity of the control system.

Usage of the inaccurate measurements could lead to generation of faulty control instructions that instruct performance of faulty control actions. The execution of the faulty control instructions may endanger the safety of the convoy of waterborne vessels. This is because such execution results in incorrect navigational adjustments, such as inappropriate changes in the speed, direction, or positioning. These adjustments may lead to collisions, grounding, or other hazardous situations. In an example, the convoy of waterborne vessels may be navigating through a narrow and challenging waterway. The at least one first sensor of the lead vessel may measure the wind speed as 15 knots, while the at least one second sensor of the following vessel may measure the wind speed as 30 knots. Such a significant deviation may be indicative of a potential sensor malfunction or a localized environmental variation.

To prevent the generation of faulty control instructions and their execution, the second digital twin is disabled. Such disabling prevents the following vessel from making wrong navigational adjustments based on inaccurate data. Optionally, if the lead vessel encounters issues, then control instructions may be issued, the execution of which leads to slow down of the lead vessel. The second digital twin is thereafter updated to reflect the detected inconsistencies. The following vessel may adjust its speed and maintain a safe distance from the lead vessel based on the updated second digital twin. This adaptive control ensures that the following vessel can navigate safely despite issues plaguing the lead vessel.

A technical effect of disabling the second digital twin of the following vessel, when deviations/inconsistencies between measurements obtained using the at least one first sensor of the lead vessel and the measurements obtained using at least second sensor of the following vessel are greater than the predetermined value, is the enhancement of reliability and operational safety of the convoy during the mission.

Optionally, the simulation data is updated or regenerated (by repeating the simulation) during the mission. In this regard, updating the simulation data involves updating one or more parameters that are used for simulation. Repetition of the simulation involves restarting the simulation after resetting all parameters to be used for simulation. Beneficially, real-time updating of the simulation data or restarting of the simulation ensure that hazards are avoided and the waterborne vessels in the convoy are able to adjust to changing environmental conditions. For example, if the wind direction changes significantly during the mission, the simulation data may be updated such that new routes are recommended and speed recommendations are generated. By traversing through the recommended routes at the recommended speeds, the waterborne vessels may navigate by accounting for the altered wind conditions.

Furthermore, if information about position and speed of a nearby vessel is received, the simulation can be restarted to optimize the path of the convoy such that potential collisions are avoided. Updating or restarting the mission based on the latest data enhances the safety and reliability of the convoy, ensuring that vessels in the convoy can respond promptly to unforeseen events and maintain optimal operational conditions. A technical effect of updating or restarting the simulation during the mission allows the vessels in the convoy to adapt to real-time changes in the environment, thereby reducing the risk of navigational errors and improving the overall accuracy of the mission.

Optionally, the simulation is updated or restarted if values measured with at least one first sensor of the lead vessel and at least one second sensor of the following vessel deviate more than the pre-determined value.

In an embodiment, the at least one first sensor of the lead vessel may measure various environmental and operational parameters such as the wind speed, the water current, vessel position, and the like, to generate a first data set. Similarly, the at least one second sensor of the following vessel may measure the various environmental and operational parameters to generate a second data set. If the deviation between two data sets is more than the predetermined value, it may be determined that the simulation is inaccurate and, subsequently, the control system may restart the simulation. Restarting the simulation may involve redesigning a mission plan based on the latest data that is determined to be accurate. After the completion of the simulation, control data is generated. The newly generated control data may be used for adjusting the operations of the following vessel for ensuring that the following vessel traverses an optimal path that is safe. Beneficially, updating or restarting the simulation prevents potential errors that could arise from inaccurate data and improves the overall reliability of operations that may be performed by waterborne vessels in the convey. Moreover, the approach of updating the simulation is scalable and adaptable with respect to various convoy sizes, vessel types, and mission requirements. The facility to update/restart the simulation allows accommodating diverse environmental conditions and operational scenarios in various maritime applications. It will be appreciated that updating or restarting the simulation based on sensor data discrepancies ensures that the control data remains aligned with real-world conditions. Such an alignment leads to optimized vessel control and improved safety during performance of operations by the waterborne vessels in the convoy.

The present disclosure also relates to the aforementioned second aspect as described above. Various embodiments and variants disclosed above, with respect to the aforementioned first aspect, apply *mutatis mutandis* to the aforementioned second aspect.

Throughout the present disclosure, the term "*control system*" refers to a hardware, a software, a firmware, or a combination of these designed to manage and regulate the operation of waterborne vessels within the convoy. The control system may encompass various subsystems (for example, such as sensors, actuators, computational units, communication interfaces, and the like) working together to ensure effective control and navigation of the convoy of waterborne vessels. Herein, the term "*server system*" refers to the hardware, the software, the firmware, or the combination of these designed to provide the mission specific information for the lead vessel. The server system manages and disseminates data essential for the control and navigation of the convoy of waterborne vessels, including environmental data, traffic information, and navigational parameters. Herein, the term "*simulating unit*" refers to the hardware, the software, the firmware, or the combination of these designed to execute simulations. In this regard, the simulating unit performs simulations of the mission using mission specific information. Herein, the term "*control data generator*" refers to the hardware, the software, the firmware, or the combination of these designed to generate the control data based on the simulation and the reference data collected during execution of the first part of the mission. Herein, the term "*calculating unit*" refers to the hardware, the software, the firmware, or the combination of these designed to compute specific values such as the correlation factor between the simulation and the reference data. Herein, the term "*controller*" refers to the hardware, the software, the firmware, or the combination of these designed that is configured to manage and direct the operation of the following vessel, utilizing the control data and the second digital twin to ensure precise and accurate navigation and performance within the convoy of waterborne vessels.

Optionally, the lead vessel and/or the following vessel have at least one sensor for measuring at least one of:
- wind speed,
- wind direction,
- water current,
- water level,
- rainfall level.

### DETAILED DESCRIPTION OF THE DRAWINGS

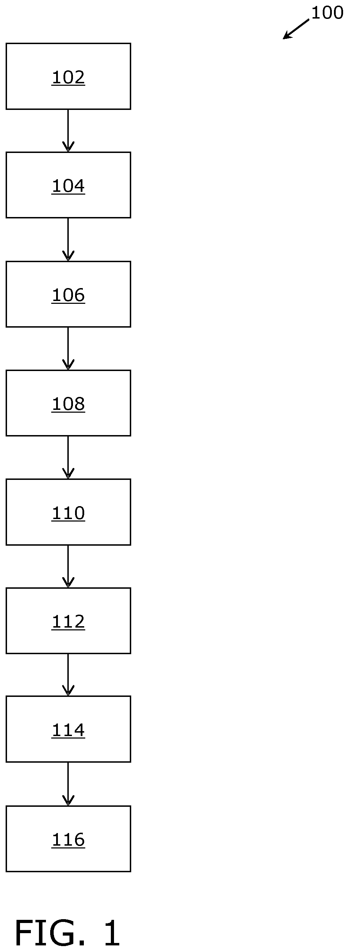

Referring to FIG. 1, illustrated are steps of a method for generating control data for an automated, computerized control of a following vessel in a convoy of waterborne vessels sailing in a body of water using an artificial intelligence model, in accordance with an embodiment of the present disclosure. With reference to FIG. 1, at step **102,** a first digital twin of a lead vessel and a second digital twin of the following vessel is provided. At step **104,** a third digital twin of the body of water is provided. At step **106,** mission specific information for the lead vessel is provided. At step **108,** a mission using the mission specific information, the artificial intelligence model, and at least one of the following: the first digital twin of the lead vessel, the second digital twin of the following vessel, the third digital twin of the body of water is simulated. At step **110,** a first part of the mission is executed. At step **112,** the control data is generated based on the simulation and the execution of the first part of the mission. At step **114,** a correlation factor is calculated between the simulation and the execution of the first part of the mission. At step **116,** when the correlation factor is higher than a predetermined value, then the generated control data and the second digital twin of the following vessel are used for controlling the following vessel.

The aforementioned steps are only illustrative and other alternatives can also be provided where one or more steps are added, one or more steps are removed, or one or more steps are provided in a different sequence without departing from the scope of the claims herein.

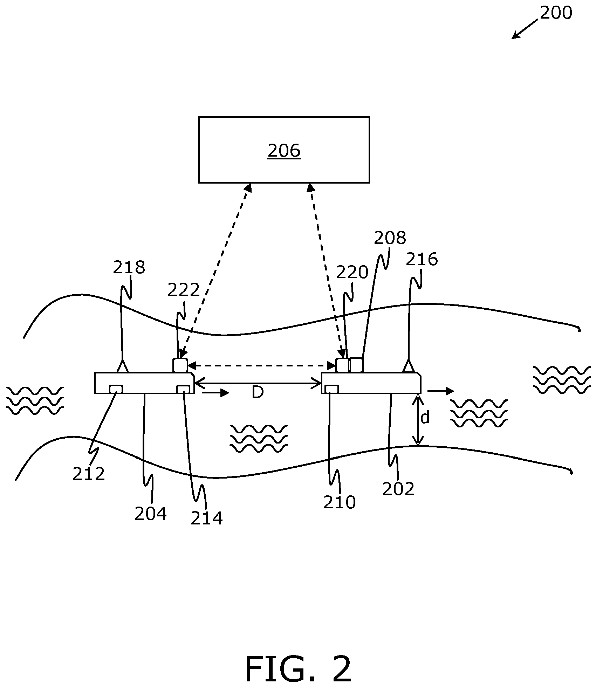

Referring to FIG. 2, illustrated is an environment in which a control system **200** is implemented for a convoy of waterborne vessels sailing in a body of water, in accordance with an embodiment of the present disclosure. With reference to FIG. 2, the control system **200** comprises a lead vessel **202** provided with a first digital twin, a following vessel **204** provided with a second digital twin, a third digital twin (not shown for sake of clarity) of the body of water (as shown by wavy lines), a server system **206,** a simulating unit **208,** a control data generator **210** of the lead vessel **202** and a control data generator **212** of the following vessel, a calculating unit (not shown for sake of clarity), and a controller **214.** Optionally, the lead vessel has at least one first sensor (depicted as a first sensor **216**) and the following vessel has at least one second sensor (depicted as a second sensor **218**), for measuring at least one of: wind speed, wind direction, wind current, water level, and rainfall level. Further, the control system **200** comprises a communication means/module **220** of the lead vessel **202** and a communication means/module **222** of the following vessel **204,** wherein the server system **206** is communicably coupled with the simulating unit **208,** the communication means/module **220** of the lead vessel **202** and the communication means/module **222** of the following vessel **204.**

Herein, the server system **206** provides a mission specific information for the lead vessel **202,** the simulating unit **208** simulates a mission using the mission specific information, an artificial intelligence model, and at least one of the following: the first digital twin of the lead vessel, the second digital twin of the following vessel, the third digital twin of the body of water, the control data generator **210** of the lead vessel **202** and the control data generator **212** of the following vessel **204** generates a control data based on the simulation and a reference data related and collected during execution of a first part of the mission by the lead vessel **202,** the calculating unit calculates a correlation factor between the simulation and the reference data, the communication means **216** exchanges the control data between the lead vessel **202** and the following vessel **204,** the controller **214** is configured to use the control data and the second digital twin to control the following vessel **204** if a correlation factor is higher than a predetermined value. Optionally, the first sensor and the second sensor measure an environment specific information during the mission, wherein when values measured with the first sensor and the second sensor deviate more than the predetermined value, the control system **200** disables the second digital twin of the following vessel **204.** Optionally, a distance between the lead vessel and the following vessel is represented by **D,** wherein the distance is a function of the correlation factor. Optionally, the predetermined value is a function of a distance **d** from the lead vessel **202** to a shoreline of the waterbody.

It may be understood by a person skilled in the art that the FIG. 2 includes a simplified environment in which the control system **200** is implemented for the convoy of waterborne vessels sailing in the body of water for sake of clarity, which should not unduly limit the scope of the claims herein. The person skilled in the art will recognize many variations, alternatives, and modifications of embodiments of the present disclosure.

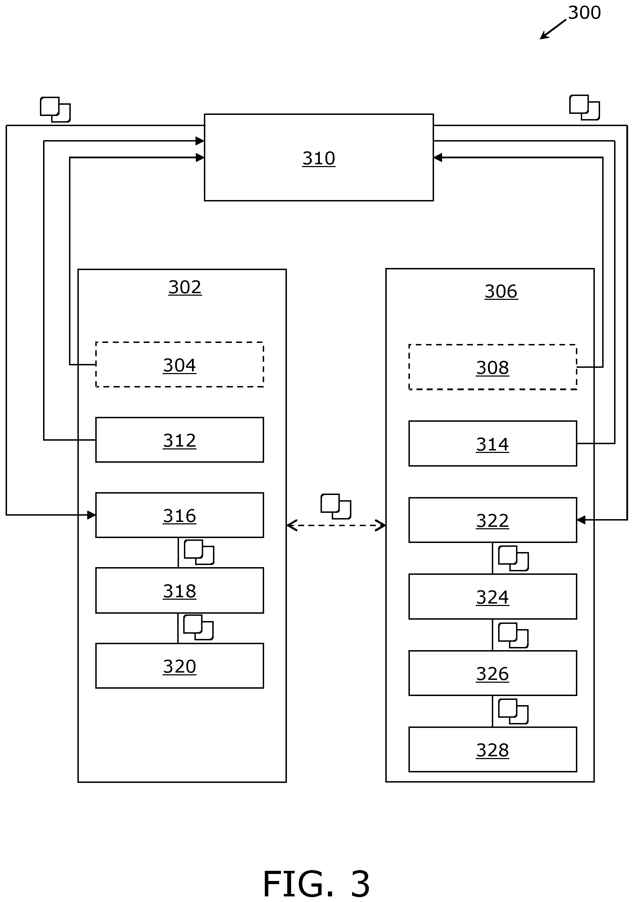

Referring to FIG. 3, illustrated is a modular view of a control system **300** for a convoy of waterborne vessels sailing in a body of water, in accordance with an embodiment of the present disclosure. With reference to FIG. 3, the control system **300** comprises a lead vessel **302** provided with a first digital twin **304,** a following vessel **306** provided with a second digital twin **308,** a third digital twin of a body of water (not shown for sake of clarity), a server system **310** to provide a mission specific information for the lead vessel **302.** The lead vessel has at least one first sensor (depicted as a first sensor **312**) and the following vessel has at least one second sensor (depicted as second sensor **314**) for measuring at least one of: wind speed, wind direction, wind current, water level, and rainfall level. Further, the lead vessel **302** comprises a simulating unit **316,** a control data generator **318,** and a calculating unit **320.** In this regard, a virtual representation provided by the first digital twin **304** of the lead vessel **302** and a data measured by the first sensor **312** is provided to the server system **310.** As shown, the server system **310** provides this data to the simulating unit **316** of the lead vessel **302,** wherein the stimulating unit **316** simulates at least one of: the data measured by the first sensor **312,** the first digital twin **304** of the lead vessel **302.** Then, a simulated data is provided to the control data generator **318** of the lead vessel **302** to generate control data based on the simulation data and a reference data related and collected during execution of a first part of a mission by the lead vessel **302.** As shown, once the control data generator **318** generates the data, this data is then provided to the calculating unit **320** to calculate a correlation factor between the simulation data and the reference data.

Further, the following vessel **306** comprises a simulating unit **322,** a control data generator **324,** a calculating unit **326** and a controller **328.**

In this regard, a virtual representation provided by the second digital twin **308** of the following vessel **306** and a data measured by the second sensor **314** is provided to the server system **310.** As shown, the server system **310** provides this data to the simulating unit **322** of the following vessel **306,** wherein the stimulating unit **322** simulates at least one of: the data measured by the second sensor **314,** the second digital twin **308** of the following vessel **306.** Then, a simulated data is provided to the control data generator **324** of the following vessel **306** to generate control data based on the simulation data and a reference data related. As shown, once the control data generator **324** generates the data, this data is then provided to the calculating unit **326** of the following vessel **306** to calculate a correlation factor between the simulation data and the reference data. As shown, the lead vessel **302,** the following vessel **306** and the server system **310** are communicably coupled to each other. Then, the controller **328** of the following vessel **306** is configured to use the control data and the second digital twin **308** to control the following vessel **306** if a correlation factor is higher than a predetermined value.

It may be understood by a person skilled in the art that the FIG. 3 includes a simplified modular view of the control system **300** for the convoy of waterborne vessels sailing in the body of water for sake of clarity, which should not unduly limit the scope of the claims herein. The person skilled in the art will recognize many variations, alternatives, and modifications of embodiments of the present disclosure.

## Claims

1. A method for generating control data for an automated, computerized control of a following vessel (204, 306) in a convoy of waterborne vessels sailing in a body of water using an artificial intelligence model, the method comprising:
- providing a first digital twin (304) of a lead vessel (202, 302) and a second digital twin (308) of the following vessel,
- providing a third digital twin of the body of water,
- providing mission specific information for the lead vessel,
- simulating a mission using the mission specific information, the artificial intelligence model, and at least one of the following: the first digital twin of the lead vessel, the second digital twin of the following vessel, the third digital twin of the body of water,
- executing a first part of the mission,
- generating the control data based on the simulation and the execution of the first part of the mission,
- calculating a correlation factor between the simulation and the execution of the first part of the mission, and
- when the correlation factor is higher than a predetermined value, then using the generated control data and the second digital twin of the following vessel for controlling the following vessel.

2. A method according to claim 1, wherein the artificial intelligence model is re-trained based on information received from the execution of the first part of the mission.

3. A method according to claim 1 or 2, wherein the artificial intelligence model is re-trained until the correlation factor is higher than the predetermined value.

4. A method according to claim 1, wherein the mission specific information comprises at least one of: environment specific information, information associated with traffic during the mission, information associated with characteristics of the lead vessel (202, 302) and/or the following vessel (204, 306), information associated with navigational data during the mission.

5. A method according to any of the preceding claims, wherein the lead vessel (202, 302) and/or the following vessel (204, 306) have at least one sensor for measuring at least one of:
- wind speed,
- wind direction,
- water current,
- water level,
- rainfall level.

6. A method according to any of the preceding claims, wherein the controlling comprises controlling a distance between the lead vessel (202, 302) and the following vessel (204, 306), wherein the distance is a function of the correlation factor.

7. A method according to any of the preceding claims, wherein the controlling comprises controlling a speed of the following vessel (204, 306) for a second part of the mission, wherein the speed is a function of the correlation factor.

8. A method according to any of the preceding claims, wherein the predetermined value is a function of a distance from the lead vessel (202, 302) to a shoreline of the waterbody.

9. A method according to any of claims 4-5, wherein the predetermined value is a function of the environment specific information.

10. A method according to any of claims 4-5, wherein the lead vessel (202, 302) has at least one first sensor (216, 312) and the following vessel (204, 306) has at least one second sensor (218, 314), for measuring the environment specific information during the mission, wherein when values measured with the at least one first sensor and the at least one second sensor deviate more than the predetermined value, the method further comprises disabling the second digital twin (308) of the following vessel.

11. A method according to any of the preceding claims, wherein the simulation is updated or re-done during the mission.

12. A method according to claim 11, wherein the simulation is updated or re-done if values measured with at least one first sensor (216, 312) of the lead vessel (202, 302) and at least one second sensor (218, 314) of the following vessel (204, 306) deviate more than the pre-determined value.

13. A method according to any of the preceding claims wherein a simulation of a previous mission is used for the simulation.

14. A method according to any of the preceding claims, wherein the control data comprises a plurality of different modes which are used for controlling the following vessel (204, 306) during the mission.

15. A method according to previous claim 14, wherein the modes used for controlling the following vessel (204, 306) during the mission comprise at least one of:
- cruising mode,
- safe state mode,
- mooring mode,
- dynamic positioning mode,
- manoeuvring mode,
- manual mode.

16. A method according to any of the preceding claims, wherein the correlation factor is dependent on at least one of:
- wind speed,
- wind direction,
- water current,
- water level,
- rainfall level.

17. A method according to claim 4, wherein the environment specific information is used as a reference data.

18. A method according to any of claims 5-17, wherein at least the water level and the rainfall level is used for modelling the provided third digital twin of the body of water.

19. A control system (200, 300) for a convoy of waterborne vessels comprising:
a lead vessel (202, 302) provided with a first digital twin (304);
a following vessel (204, 306) provided with a second digital twin (308);
a third digital twin of a body of water;
a server system (206, 310) to provide a mission specific information for the lead vessel;
a simulating unit (208, 316, 322) to simulate the mission using the mission specific information, an artificial intelligence model, and at least one of the following: the first digital twin of the lead vessel, the second digital twin of the following vessel, the third digital twin of the body of water;
a control data generator (210, 212, 318, 324) to generate control data based on a simulation data and a reference data related and collected during execution of the first part of the mission by the lead vessel;
a calculating unit (320, 326) to calculate a correlation factor between the simulation data and the reference data;
a controller (214, 328) configured to use the control data and the second digital twin to control the following vessel, if the correlation factor is higher than a predetermined value.

20. A control system (200, 300) according to claim 19, wherein the lead vessel (202, 302) and/or the following vessel (204, 306) have at least one sensor for measuring at least one of:
- wind speed,
- wind direction,
- water current,
- water level,
- rainfall level.
